# EUROPEAN PATENT APPLICATION

(11) **EP 4 576 404 A1**
(43) Date of publication of application: **25.06.2025**
(21) Application number: 23907912.2
(22) Date of filing: 19.12.2023
(51) Int. Cl.: H01M 50/533, H01M 50/516, H01M 50/519, H01M 50/24

(54) **BATTERY PACK**

(30) Priority: 22.12.2022 KR 20220182097
(71) Applicant: LG Energy Solution, Ltd., Seoul 07335 (KR)
(72) Inventor: OH, Sung Jin, Daejeon 34122 (KR)
(74) Representative: Plasseraud IP
(86) International application number: PCT/KR2023/095123
(87) International publication number: WO 2024/136629

(57) **Abstract**

A battery pack according to one example of the present invention comprises first and second cell modules each including a plurality of battery cells having a first electrode terminal and a second electrode terminal, a case in which the plurality of battery cells is accommodated, a first connection tab connected to the first electrode terminal and exposed to a first end side of the case, and a second connection tab connected to the second electrode terminal and extending outside a second end of the case, which is opposite to the first end; and a circuit board part electrically connecting the first cell module and the second cell module in a state where the first cell module and the second cell module are sequentially arranged, wherein the first cell module and the second cell module may be disposed so that the second connection tab of the first cell module is positioned on the first connection tab of the second cell module, and the circuit board part may be located on the second connection tab of the first cell module, and may be electrically connected to the first connection tab of the second cell module via the second connection tab of the first cell module.

## Description

### Technical Field

The present invention relates to a battery pack, and more specifically relates to a battery pack capable of reducing the number of welds upon an assembly process of a battery pack composed of a plurality of cell modules.

This application claims the benefit of priority based on Korean Patent Application No. 10-2022-0182097 dated December 22, 2022, the disclosure of which is incorporated herein by reference in its entirety.

### Background Art

Among secondary batteries, many studies have been conducted on lithium secondary batteries with high energy density and discharge voltage, which are also commercialized and widely used. Depending on the type of external device as used, secondary batteries are also used in the form of a single battery, or are also used in the form of a battery pack in which multiple battery cells are electrically connected.

For example, while small devices such as mobile phones can operate for a predetermined time with power and capacity of a single battery, medium or large devices such as notebook computers, power tools, and hybrid electric vehicles require the use of medium and large-sized battery packs due to power and capacity problems. The battery pack is one that a plurality of battery cells is arranged in series and/or parallel.

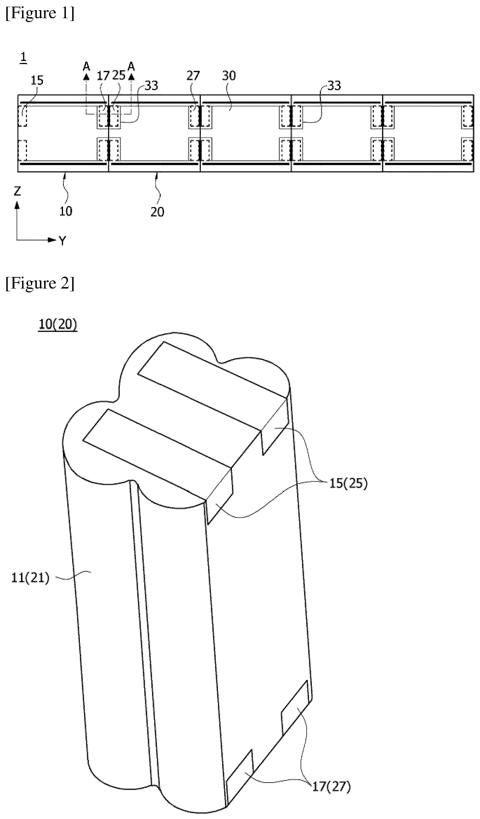

Figures 1 to 3 are diagrams for explaining a structure of a battery pack according to a conventional art.

Figure 1 is a plan view of a battery pack (1) according to a conventional art, and Figure 2 is a perspective diagram of a cell module (10) (20) according to a conventional prior art.

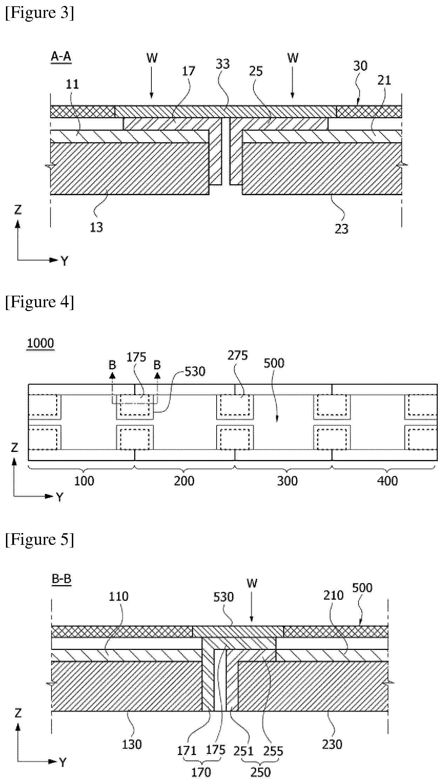

In addition, Figure 3 is a cross-sectional diagram cut along a line A-A of Figure 1, which is a diagram for explaining a process of welding a circuit board part to two cell modules.

As shown in Figures 1 to 3, the conventional battery pack (1) comprises a plurality of cell modules (10, 20) and a circuit board (30).

For convenience of explanation, the plurality of cell modules (10, 20) is referred to as a first cell module (10) and a second cell module (20) according to the arrangement order. The first cell module (10) and the second cell module (20) have the same structure. In Figure 1, the y-axis direction represents the longitudinal direction of the battery cell (or case), and the z-axis direction represents the radial direction of the battery cell (or case).

Referring to Figures 2 and 3, the first cell module (10) comprises a case (11), a battery cell (13), a first tab portion (15), and a second tab portion (17). The first tab portion (15) is provided so that it is electrically connected to the battery cell (13) on one side of the case (11) and contacts the outer peripheral surface of the case (11). Then, the second tab portion (17) is provided so that it is electrically connected to the battery cell (13) on the other side of the case (11) and contacts the outer peripheral surface of the case (11).

Also, the second cell module (20) comprises a case (21), a battery cell (23), a first tab portion (25), and a second tab portion (27). The first tab portion (25) is provided so that it is electrically connected to the battery cell (23) on one side of the case (21) and contacts the outer peripheral surface of the case (21). Then, the second tab portion (27) is provided so that it is electrically connected to the battery cell (23) on the other side of the case (21) and contacts the outer peripheral surface of the case (21).

As shown in Figure 3, when the first cell module (10) and the second cell module (20) are disposed in a line in the longitudinal direction (Y) of the battery cell (13), the second tab portion (17) of the first cell module (10) is located adjacent to the first tab portion (25) of the second cell module (20).

The circuit board (30) is laminated along a direction (z) different from the longitudinal direction of the battery cell (13), that is, the radial direction of the battery cell, which is a direction perpendicular to the longitudinal direction (Y) of the battery cell (13) to cover the second tab portion (17) of the first cell module (10) and the first tab portion (25) of the second cell module (20).

The first cell module (10) and the second cell module (20) are electrically connected through the circuit board (30), and the circuit board (30) has a plurality of connectors (33), where each connector (33) is electrically connected to the first cell module (10) and the second cell module (20).

Referring to Figure 3, the circuit board (30) is irradiated with a welding beam (W) at a position where the circuit board (30) is laminated on the second tab portion (17) of the first cell module (10). Subsequently, the circuit board (30) is irradiated with a welding beam (B) at a position where the circuit board (30) is laminated on the first tab portion (25) of the second cell module (20).

Accordingly, the connector (33) of the circuit board (30) is electrically connected to the second tab portion (17) of the first cell module (10) and the first tab portion (25) of the second cell module (20), respectively through two welds.

Upon the assembly process of the conventional battery pack (1), at least two welding processes are required per connector (33) to connect two cell modules (10, 20), and as the number of connected cell modules (10, 20) increases, the number of welds also increases.

### Disclosure

### Technical Problem

The present invention is intended to provide a battery pack capable of reducing the number of welds upon welding a circuit board part which electrically connects a plurality of cell modules by changing the structure of a connection tab connected to a battery cell.

### Technical Solution

In order to solve the above-described problem, a battery pack according to one example of the present invention comprises first and second cell modules each including a plurality of battery cells having a first electrode terminal and a second electrode terminal, a case in which the plurality of battery cells is accommodated, a first connection tab connected to the first electrode terminal and exposed to a first end side of the case, and a second connection tab connected to the second electrode terminal and extending outside a second end of the case, which is opposite to the first end.

Also, the battery pack comprises a circuit board part electrically connecting the first cell module and the second cell module in a state where the first cell module and the second cell module are sequentially arranged.

In addition, the first cell module and the second cell module may be disposed so that the second connection tab of the first cell module is positioned on the first connection tab of the second cell module, and the circuit board part may be located on the second connection tab of the first cell module, and may be electrically connected to the first connection tab of the second cell module via the second connection tab of the first cell module.

Furthermore, the first connection tab may have a first tab portion in contact with the first electrode terminal at the first end side of the case, and a first bent portion bent at the first tab portion to be in contact with the outer peripheral surface of the first end side of the case.

The second connection tab may have a second tab portion in contact with the second electrode terminal at the second end side of the case, and a second bent portion bent at the second tab portion to extend to the outside of the second end.

Also, the first tab portion may extend along the radial direction of the battery cell, and the first bent portion may extend along the longitudinal direction of the battery cell.

In addition, the second tab portion may extend along the radial direction of the battery cell, and the second bent portion may extend along the longitudinal direction of the battery cell.

Furthermore, the first tab portion and the first bent portion may be provided to be orthogonal to each other, and the second tab portion and the second bent portion may be provided to be orthogonal to each other.

Also, the first bent portion may extend along the longitudinal direction of the case facing the second end from the first end. In addition, the second bent portion may extend along the longitudinal direction of the case facing the second end from the first end.

Furthermore, the first bent portion and the second bent portion may be arranged in parallel.

Also, the second connection tab may be provided so that the inner surface of the second bent portion is positioned on the same virtual plane as the outer surface of the first bent portion.

In addition, the case may be provided with at least one groove portion on the first end side outer peripheral surface, and in the first connection tab, the first tab portion may be electrically connected to the first electrode terminal, and the first bent portion may be seated in the groove portion.

Furthermore, the first connection tab may be provided so that when the first bent portion is seated in the groove portion, the outer surface of the first bent portion is exposed to the outside of the case.

Also, the second connection tab may be provided so that the inner surface of the second bent portion is located on the same virtual plane as the outer surface of the case, and the outer surface of the second bent portion may be positioned to be apart at a predetermined interval from the outer surface of the case.

In addition, when the first cell module and the second cell module are sequentially arranged in the longitudinal direction of the battery cell, the second tab portion of the second connection tab equipped in the first cell module may be spaced apart from the first tab portion of the first connection tab equipped in the second cell module, and the second bent portion of the second connection tab equipped in the first cell module may be disposed on the first bent portion of the first connection tab equipped in the second cell module.

Furthermore, the circuit board part may be disposed on the first cell module and the second cell module so that a connector covers the second bent portion, and the connector may be welded and coupled to the second bent portion of the first cell module and the first bent portion of the second cell module.

Also, the first bent portion of the second cell module, the second bent portion of the first cell module, and the circuit board part may be laminated and disposed in a direction different from the longitudinal direction of the battery cell.

In addition, the circuit board part may be a flexible printed circuit board (FPCB). The circuit board part may be provided with a control circuit for controlling discharging or charging and discharging of each cell module.

Furthermore, the circuit board part may comprise a plurality of connectors, and the connectors may be formed of a metal material.

### Advantageous Effects

As discussed above, the battery pack related to one example of the present invention has the following effects.

The conventional battery pack assembly process required at least two welding processes per connector of the circuit board part to connect two cell modules. On the other hand, by changing the structure of the connection tab, the present invention can electrically connect two cell modules through one weld per connector of the circuit board part upon the assembly process of the battery pack.

Specifically, after the second connection tab protruding to the other side of the first cell module is laminated on the first connection tab equipped on one side of the second cell module, the circuit board part can be laminated on the second connection tab. In this instance, the connector of the circuit board part is welded once to the second connection tab of the first cell module and the first connection tab of the second cell module, so that it is possible to electrically connect the first cell module and the second cell module.

Compared to the conventional battery pack assembly process, the present invention reduces the number of welds in the battery pack assembly process by half, so that it is possible to shorten the battery pack assembly process time.

In addition, by shortening the battery pack assembly process time, ultimately, it is possible to increase the productivity of the battery pack.

### Description of Drawings

Figure 1 schematically shows a plan view of a battery pack according to a conventional art.
Figure 2 schematically shows a perspective diagram of a cell module according to a conventional art.
Figure 3 is a cross-sectional diagram cut along a line A-A of Figure 1, which is a diagram for explaining a process of welding a circuit board part to two cell modules.
Figure 4 schematically shows a plan view of a battery pack according to one example of the present invention.
Figure 5 is a cross-sectional diagram cut along a line B-B of Figure 4, which is a diagram for explaining a process of welding a circuit board part to two cell modules.
Figure 6 schematically shows an assembled cross-sectional diagram of a first cell module according to one example of the present invention.
Figure 7 schematically shows an assembled cross-sectional diagram of a second cell module according to one example of the present invention.
Figure 8 schematically shows a combined perspective diagram of a first cell module and a second cell module according to one example of the present invention.
Figure 9 schematically shows a perspective diagram of a first cell module (second cell module) according to one example of the present invention.

### Mode for Invention

Hereinafter, a battery pack according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

Figure 4 schematically shows a plan view of a battery pack according to one example of the present invention, and Figure 5 is a cross-sectional diagram cut along a line B-B of Figure 4, which is a diagram for explaining a process of welding a circuit board part to two cell modules.

The battery pack (1000) according to one example of the present invention comprises a plurality of cell modules (100, 200, 300, 400), and a circuit board part (500) for electrically connecting two adjacent cell modules (100, 200, 300, 400). In addition, the circuit board part (500) may be a flexible printed circuit board (FPCB).

The circuit board part (500) may be provided with a control circuit for controlling charging or charging and discharging of each cell module (100, 200, 300, 400), and the circuit board part (500) may comprise a plurality of connectors (530), where each connector (530) may be electrically connected to two adjacent cell modules (100, 200), and the connector (530) may be made of a metal material.

The respective cell modules (100, 200, 300, 400) have the same structure, and hereinafter, for convenience of description, according to the arrangement order of the plurality of cell modules (100, 200), the plurality of cell modules is referred to as a first cell module (100) and a second cell module (200) separately, and an electrical connection structure of the first cell module (100) and the second cell module (200) will be described as an example.

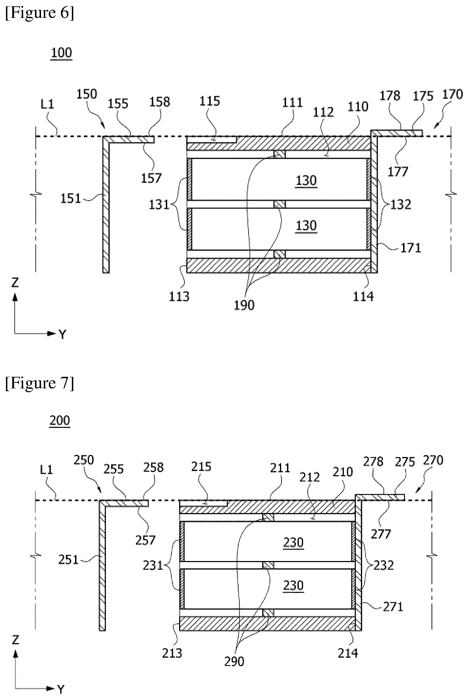

Figure 6 schematically shows an assembled cross-sectional diagram of a first cell module according to one example of the present invention, and Figure 7 schematically shows an assembled cross-sectional diagram of a second cell module according to one example of the present invention.

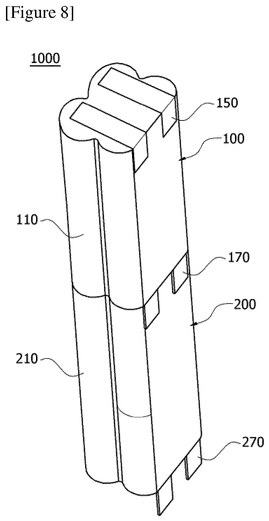

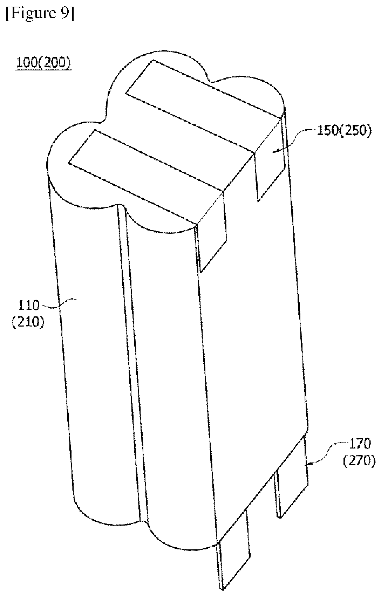

In addition, Figure 8 schematically shows a combined perspective diagram of a first cell module and a second cell module according to one example of the present invention, and Figure 9 schematically shows a perspective diagram of a first cell module (second cell module) according to one example of the present invention.

As shown in Figures 4 and 8, the first cell module (100) and the second cell module (200) are disposed in a line in the longitudinal direction (Y-axis direction) of the battery cell.

In this document, the y-axis direction represents the longitudinal direction of the battery cell (or case), and the z-axis direction represents the radial direction of the battery cell (or case).

The first cell module (100) and the second cell module (200) have the same structure. In this document, the same names are used for the same components, and reference numerals for components equipped in the first cell module (100) and the second cell module (200) are assigned differently.

The battery pack (1000) comprises a first cell module (100) and a second cell module (200), and the respective cell modules (100, 200) each comprise a plurality of batteries having a first electrode terminal and a second electrode terminal, a case in which the plurality of battery cells is accommodated, a first connection tab connected to the first electrode terminal and exposed to the first end side of the case, and a second connection tab connected to the second electrode terminal and extending outside a second end of the case, which is opposite to the first end.

Also, the first and second connection tabs may each be formed of a metal material having electrical conductivity.

Referring to Figures 5 and 6, the first cell module (100) may comprise a case (110), a plurality of battery cells (130), a first connection tab (150), a second connection tab (170), and a support rib (190).

Referring to Figures 5 and 7, the second cell module (200) may comprise a case (210), a plurality of battery cells (230), a first connection tab (250), a second connection tab (270), and a support rib (290).

First, referring to Figure 6, in the first cell module (100), the case (110) has a cylindrical structure opened in the longitudinal direction (Y) of the battery cell. The case (110) is provided with at least one groove portion (115) on the outer peripheral surface of the first end (113) side.

The plurality of battery cells (130) is each accommodated in an internal space (112) of the case (110). Each battery cell (130) has a first electrode terminal (131) and a second electrode terminal (132). Also, in the first cell module (100), each battery cell may be disposed so that the first electrode terminal (131) faces the first end (113) side of the case (110), and may be disposed so that the second electrode terminal (132) faces the second end (114) side of the case.

The support rib (190) is mounted in the internal space (112) of the case (110). The support rib (190) supports the plurality of battery cells (130) so that the respective battery cells (130) are disposed to be spaced apart inside the case (110).

The first connection tab (150) is connected to the first electrode terminal (131) and is exposed to the first end (113) side of the case (110). Here, the first electrode terminal (131) may be a positive electrode or a negative electrode, and the second electrode terminal (132) may have an opposite polarity to the first electrode terminal (131).

The first connection tab (150) has a first tab portion (151), and a first bent portion (155) bent from the first tab portion (151). Specifically, the first connection tab (150) has a first tab portion (151) in contact with the first electrode terminal (131) at the first end (113) side of the case (110), and a first bent portion (155) bent at the first tab portion (151) to be in contact with the outer peripheral surface (111) of the first end (113) side of the case (110).

The first tab portion (151) may extend along the radial direction (z-axis direction) of the battery cell (130), and the first bent portion (155) may extend along the longitudinal direction (y-axis direction) of the battery cell (130). As one example, the first tab portion (151) and the first bent portion (155) may be provided to be orthogonal to each other.

The first connection tab (150) is mounted on the case (110) so that the first tab portion (151) is in contact with the first electrode terminal (131) at the first end (113) side of the case (110), and the first bent portion (155) is in contact with the outer peripheral surface (111) of the first end (113) side of the case (110).

The first connection tab (150) is mounted on the case (110) so that the first bent portion (155) is seated in the groove portion (115). The inner surface (157) of the first bent portion (155) is in contact with the groove portion (115).

When the first bent portion (155) of the first connection tab (150) is seated in the groove portion (115), the outer surface (158) of the first bent portion (155) may be located on the same virtual plane (L1) as the outer surface (111) of the case (110).

The second connection tab (170) is electrically connected to the second electrode terminal (132) and extends to the outside of the second end (114) of the case (110), which is opposite to the first end (113).

The second connection tab (170) has a second tab portion (171), and a second bent portion (175) bent at the second tab portion (171). Specifically, the second connection tab (170) has a second tab portion (171) in contact with the second electrode terminal (132) at the second end (114) side of the case (110), and a second bent portion (175) bent at the second tab portion (171) to extend to the outside of the second end (114).

The second tab portion (171) may extend along the radial direction (z-axis direction) of the battery cell (130), and the second bent portion (175) may extend along the longitudinal direction (y-axis direction) of the battery cell (130). As one example, the second tab portion (171) and the second bent portion (175) may be provided to be orthogonal to each other.

The second connection tab (170) may be mounted on the case (110) so that the second tab portion (171) is in contact with the second electrode terminal (132) at the second end (114) side of the case (110), and the second bent portion (175) extends outside the second end (114).

The second connection tab (170) may be mounted on the case (110) so that the inner surface (177) of the second bent portion (175) lies on the same virtual plane (L1) as the outer surface (158) of the first bent portion (155).

The second connection tab (170) may be mounted on the second end (114) side of the case (110) so that the inner surface (177) of the second bent portion (175) lies on the same virtual plane (L1) as the outer surface (111) of the case (110), and the outer surface (178) of the second bent portion (175) is stepped with respect to the outer surface (111) of the case.

Referring to Figure 7, in the second cell module (200), the case (210) has a cylindrical structure opened in the longitudinal direction (Y) of the battery cell. The case (210) is provided with at least one groove portion (215) at the outer peripheral surface of the first end (213) side.

The plurality of battery cells (230) is each accommodated in the internal space (212) of the case (210). Each battery cell (230) has a first electrode terminal (231) and a second electrode terminal (232). Also, in the second cell module (200), each battery cell may be disposed so that the first electrode terminal (231) faces the first end (213) side of the case (210), and may be disposed so that the second electrode terminal (232) faces the second end (214) side of the case (210).

The support rib (290) is mounted in the internal space (212) of the case (210). The support rib (290) supports the plurality of battery cells (230) so that the respective battery cells (230) are disposed to be spaced apart inside the case (210).

The first connection tab (250) is connected to the first electrode terminal (231) and is exposed to the first end (213) side of the case (210). Here, the first electrode terminal (231) may be a positive electrode or a negative electrode, and the second electrode terminal (232) may have an opposite polarity to the first electrode terminal (231).

The first connection tab (250) has a first tab portion (251), and a first bent portion (255) bent at the first tab portion (251). Specifically, the first connection tab (250) has a first tab portion (251) in contact with the first electrode terminal (231) at the first end (213) side of the case (210), and a first bent portion (255) bent at the first tab portion (251) to be in contact with the outer peripheral surface (211) of the first end (213) side of the case (210).

The first tab portion (251) may extend along the radial direction (z-axis direction) of the battery cell (230), and the first bent portion (255) may extend along the longitudinal direction (y-axis direction) of the battery cell (230). As one example, the first tab portion (251) and the first bent portion (255) may be provided to be orthogonal to each other.

The first connection tab (250) is mounted on the case (210) so that the first tab portion (251) is in contact with the first electrode terminal (231) at the first end (213) side of the case (210), and the first bent portion (255) is in contact with the outer peripheral surface (211) of the first end (213) side of the case (210).

The first connection tab (250) is mounted on the case (210) so that the first bent portion (255) is seated in the groove portion (215). The inner surface (257) of the first bent portion (255) is in contact with the groove portion (215).

When the first bent portion (255) of the first connection tab (250) is seated in the groove portion (215), the outer surface (258) of the second bent portion (255) may be located on the same virtual plane (L1) as the outer surface (211) of the case (210).

The second connection tab (270) is electrically connected to the second electrode terminal (232) and extends to the outside of the second end (214) of the case (210), which is opposite to the first end (213).

The second connection tab (270) has a second tab portion (271), and a second bent portion (275) bent at the second tab portion (271). Specifically, the second connection tab (270) has a second tab portion (271) in contact with the second electrode terminal (232) at the second end (214) side of the case (210), and a second bent portion (275) bent at the second tab portion (271) to extend to the outside of the second end (214).

The second tab portion (271) may extend along the radial direction (z-axis direction) of the battery cell (230), and the second bent portion (275) may extend along the longitudinal direction (y-axis direction) of the battery cell (230). As one example, the second tab portion (271) and the second bent portion (275) may be disposed to be orthogonal to each other.

The second connection tab (270) may be mounted on the case (210) so that the second tab portion (271) is in contact with the second electrode terminal (232) at the second end (214) side of the case (210), and the second bent portion (275) extends outside the second end (214).

The second connection tab (270) may be mounted on the case (210) so that the inner surface (277) of the second bent portion (275) lies on the same virtual plane (L1) as the outer surface (258) of the first bent portion (255).

The second connection tab (270) may be mounted on the second end (214) side of the case (210) so that the inner surface (277) of the second bent portion (275) lies on the same virtual plane (L1) as the outer surface (211) of the case (210), and the outer surface (278) of the second bent portion (275) is stepped with respect to the outer surface (211) of the case (210).

Hereinafter, the coupling structure of a circuit board part (500) to the first cell module (100) and the second cell module (200) will be described.

The battery pack (1000) comprises a circuit board part (500) electrically connecting the first cell module (100) and the second cell module (200) in a state where the first cell module (100) and the second cell module (200) are sequentially arranged.

Referring to Figures 4 and 8, the first cell module (100) and the second cell module (200) are sequentially arranged in the longitudinal direction (Y) of the battery cell.

Referring to Figures 5 to 9, when the first cell module (100) and the second cell module (200) are sequentially arranged in the longitudinal direction (Y) of the battery cell, the second tab portion (171) of the second connection tab (170) equipped in the first cell module (100) is disposed to be spaced apart from the first tab portion (251) of the first connection tab (250) equipped in the second cell module (200). Then, the second bent portion (175) of the second connection tab (170) equipped in the first cell module (100) is disposed on the first bent portion (255) of the first connection tab (250) equipped in the second cell module (200).

Referring to Figures 5 and 6, in the first connection tab (250) equipped in the second cell module (200), the outer surface of the first bent portion (255) may be located on the same virtual plane (L1) as the outer surface of the case (210).

Then, the second bent portion (175) of the second connection tab (170) equipped in the first cell module (100) is laminated on the first bent portion (255) of the first connection tab (250) equipped in the second cell module (200) in a direction (z) different from the longitudinal direction (y-axis direction) of the battery cell. At this time, the inner surface (177) of the second bent portion (175) of the first cell module (100) may be in contact with the outer surface (258) of the first bent portion (255) of the second cell module (200).

The circuit board part (500) is disposed on the first cell module (100) and the second cell module (200) to cover the second bent portion (175) of the first cell module (100). Particularly, the circuit board part (500) is disposed so that the connector (530) covers the second bent portion (175) of the first cell module (100).

The circuit board part (500) may electrically connect the first cell module (100) and the second cell module (200), and as the circuit board part (500), a flexible printed circuit board (FPCB) may be used.

Referring to Figure 5, in the circuit board part (500), the connector (530) may be located on the second connection tab (170) of the first cell module (100), and the connector (530) may be connected to the first connection tab (250) of the second cell module (200) via the second connection tab (170) of the first cell module (100).

As shown in Figure 5, the first bent portion (155) of the second cell module (200), the second bent portion (175) of the first cell module (100), and the circuit board part (300) are laminated and disposed in a direction (z-axis direction) different from the longitudinal direction (y-axis direction) of the battery cell.

Here, the second bent portion (175) protruding to the other side of the first cell module (100) is disposed between the first bent portion (255) of the first connection tab (250) disposed on one side of the second cell module (200) and the circuit board part (500).

That is, the circuit board part (500) is disposed on the first cell module (100) and the second cell module (200) so that the connector (530) covers the second bent portion (175), and the connector (530) is welded and coupled to the second bent portion (175) of the first cell module (100) and the first bent portion (255) of the second cell module (200).

In the circuit board part (500), the connector (530) is welded and coupled to the second bent portion (175) of the first cell module (100) and the first bent portion (155) of the second cell module (200). The circuit board part (300) may be vertically irradiated with a welding beam (W) in a direction (Z) different from the longitudinal direction of the battery cell.

In the present invention, after the second connection tab (170) protruding to the other side of the first cell module (100) is laminated on the first connection tab (250) equipped on one side of the second cell module (200), the connector (530) of the circuit board part (500) is welded once to the second connection tab (170) of the first cell module (100) and the first connection tab (250) of the second cell module (200), whereby it is possible to electrically connect the first The cell module (100) and the second cell module (200).

The conventional battery pack (1) assembly process required at least two welding processes to connect two cell modules (10, 20), but on the other hand, by changing the structure of the connection tab, the present invention can electrically connect two cell modules (100, 200) through one welding per connector (530) upon the assembly process of the battery pack (1000).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the battery pack related to one example of the present invention, it is possible to reduce the number of welds upon the assembly process of the battery pack composed of a plurality of cell modules.

## Claims

1. A battery pack comprising:
first and second cell modules each including a plurality of battery cells having a first electrode terminal and a second electrode terminal, a case in which the plurality of battery cells is accommodated, a first connection tab connected to the first electrode terminal and exposed to a first end side of the case, and a second connection tab connected to the second electrode terminal and extending outside a second end of the case, which is opposite to the first end; and
a circuit board part electrically connecting the first cell module and the second cell module in a state where the first cell module and the second cell module are sequentially arranged, wherein
the first cell module and the second cell module are disposed so that the second connection tab of the first cell module is positioned on the first connection tab of the second cell module, and
the circuit board part is located on the second connection tab of the first cell module, and is electrically connected to the first connection tab of the second cell module via the second connection tab of the first cell module.

2. The battery pack according to claim 1, wherein
the first connection tab has a first tab portion in contact with the first electrode terminal at the first end side of the case, and a first bent portion bent at the first tab portion to be in contact with the outer peripheral surface of the first end side of the case, and
the second connection tab has a second tab portion in contact with the second electrode terminal at the second end side of the case, and a second bent portion bent at the second tab portion to extend to the outside of the second end.

3. The battery pack according to claim 2, wherein
the first bent portion extends along the longitudinal direction of the case facing the second end from the first end, and
the second bent portion extends along the longitudinal direction of the case facing the second end from the first end.

4. The battery pack according to claim 3, wherein
the first bent portion and the second bent portion are arranged in parallel.

5. The battery pack according to claim 3, wherein
the second connection tab is provided so that the inner surface of the second bent portion is positioned on the same virtual plane as the outer surface of the first bent portion.

6. The battery pack according to claim 2, wherein
the case is provided with at least one groove portion on the first end side outer peripheral surface, and
in the first connection tab, the first tab portion is electrically connected to the first electrode terminal, and the first bent portion is seated in the groove portion.

7. The battery pack according to claim 6, wherein
the first connection tab is provided so that when the first bent portion is seated in the groove portion, the outer surface of the first bent portion is exposed to the outside of the case.

8. The battery pack according to claim 2, wherein
the second connection tab is provided so that the inner surface of the second bent portion is located on the same virtual plane as the outer surface of the case, and the outer surface of the second bent portion is positioned to be apart at a predetermined interval from the outer surface of the case.

9. The battery pack according to claim 3, wherein
when the first cell module and the second cell module are sequentially arranged in the longitudinal direction of the battery cell,
the second tab portion of the second connection tab equipped in the first cell module is spaced apart from the first tab portion of the first connection tab equipped in the second cell module, and
the second bent portion of the second connection tab equipped in the first cell module is disposed on the first bent portion of the first connection tab equipped in the second cell module.

10. The battery pack according to clause 9, wherein
the circuit board part is disposed on the first cell module and the second cell module so that a connector covers the second bent portion, and
the connector is welded and coupled to the second bent portion of the first cell module and the first bent portion of the second cell module.

11. The battery pack according to claim 10, wherein
the first bent portion of the second cell module, the second bent portion of the first cell module, and the circuit board part are laminated and disposed in a direction different from the longitudinal direction of the battery cell.

12. The battery pack according to claim 10, wherein
the circuit board part is a flexible printed circuit board.

13. The battery pack according to claim 10, wherein
the connector is formed of a metal material.

14. The battery pack according to claim 2, wherein
the first tab portion extends along the radial direction of the battery cell, and the first bent portion extends along the longitudinal direction of the battery cell, and
the second tab portion extends along the radial direction of the battery cell, and the second bent portion extends along the longitudinal direction of the battery cell.

15. The battery pack according to claim 14, wherein
the first tab portion and the first bent portion are provided to be orthogonal to each other, and
the second tab portion and the second bent portion are provided to be orthogonal to each other.
